Europäisches Patentamt

European Patent Office

Office européen des brevets

(11) Veröffentlichungsnummer: **0 462 650 A2**

# (12) EUROPÄISCHE PATENTANMELDUNG

(21) Anmeldenummer: **91201446.1**

(22) Anmeldetag: **12.06.91**

(51) Int. Cl.5: **H04J 3/12**

(30) Priorität: **18.06.90 DE 4019364**

(43) Veröffentlichungstag der Anmeldung:
**27.12.91 Patentblatt 91/52**

(84) Benannte Vertragsstaaten:
**DE FR GB**

(71) Anmelder: **Philips Patentverwaltung GmbH
Wendenstrasse 35 Postfach 10 51 49
W-2000 Hamburg 1(DE)**

(84) **DE**

Anmelder: **N.V. Philips' Gloeilampenfabrieken
Groenewoudseweg 1
NL-5621 BA Eindhoven(NL)**

(84) **FR GB**

(72) Erfinder: **Endress, Peter, Dipl.-Ing.
Neuendettelsauer Strasse 38
W-8500 Nürnberg 60(DE)**

(74) Vertreter: **Volmer, Georg et al
Philips Patentverwaltung GmbH
Wendenstrasse 35, Postfach 10 51 49
W-2000 Hamburg 1(DE)**

(54) **Zeitmultiplexübertragungsanordnung.**

(57) Die Erfindung bezieht sich auf eine Zeitmultiplexübertragungsanordnung mit einer Vermittlungsanordnung (3), der von wenigstens einem Teilnehmergerät (1) über eine Eingangsstrecke (2) mit einer ersten Bitrate B1 Nutzinformationen in mehreren, untereinander einen gleichen Abstand aufweisenden Nutz-Zeitkanälen zugeführt werden. Die Vermittlungsanordnung (3) fügt die Nutzinformationen der Nutz-Zeitkanäle der Eingangsstrecke (2) in jeweils untereinander einen Abstand von $((N+1)B2/B1-1)$ Zeitkanäle aufweisende Nutz-Zeitkanäle einer Ausgangsstrecke (6) ein, die eine gegenüber der ersten Bitrate B1 um ein ganzzahliges Vielfaches erhöhte zweite Bitrate B2 aufweist. N ist gleich der Anzahl der Zeitkanäle zwischen zwei Nutz-Zeitkanälen der Eingangsstrecke.

FIG.1

EP 0 462 650 A2

Die Erfindung bezieht sich auf eine Zeitmultiplexübertragungsanordnung mit einer Vermittlungsanordnung, zum Empfangen von Nutzinformationen in mehreren, untereinander einen gleichen Abstand aufweisenden Nutz-Zeitkanälen von wenigstens einem Teilnehmergerät über eine Eingangsstrecke mit einer ersten Bitrate B1 und zum Einfügen von Nutzinformationen eines Nutz-Zeitkanals der Eingangsstrecke in einen Nutz-Zeitkanal einer Ausgangsstrecke, die zum Erzeugen einer gegenüber der ersten Bitrate B1 um ein ganzzahliges Vielfaches erhöhten zweiten Bitrate B2 vorgesehen ist.

Bei einem Zeitmultiplexübertragungssystem werden Nutzinformationen eines Teilnehmergerätes (zum Beispiel Telefon oder Rechner) über eine Eingangsstrecke in wenigstens einen Zeitkanal zu einer Vermittlungsanordnung übertragen. Eine Eingangsstrecke kann aus einer oder mehreren Leitungen bestehen, über die digitale Informationen, z.B. Sprache in PCM-Codierung (Puls-Code-Modulation) oder in DCDM-Codierung (Digitally Controlled Delta Modulation), in einem oder mehreren Zeitkanälen übertragen werden. In der Regel wird pro Teilnehmergerät ein Zeitkanal als Nutz-Zeitkanal für die Übertragung der Nutzinformationen des Teilnehmergerätes verwendet. Bei bestimmten Teilnehmergeräten, z.B. Rechnern, ist deren Bitrate höher als die für einen Zeitkanal vorgesehene Bitrate. In solchen Fällen können zur Übertragung mehrere z. B. zeitlich aufeinanderfolgende Nutz-Zeitkanäle zur Verfügung gestellt werden. Beispielsweise können über eine Eingangsstrecke mit einer Bitrate von 64 kbit/s und vier Zeitkanälen mit jeweils einer Bitrate von 16 kbit/s die Nutzinformationen eines Rechners, dessen Bitrate 64 kbit/s ist, über alle vier Kanäle übertragen werden. In einer mit der Eingangsstrecke verbundenen Vermittlungsanordnung werden die Nutzinformationen der vier Nutz-Zeitkanäle auf Nutz-Zeitkanäle einer Ausgangsstrecke vermittelt, die eine höhere Bitrate, z.B. 256 kbit/s aufweist. Hierbei kann es zu einer Verwürfelung der Nutzinformation kommen.

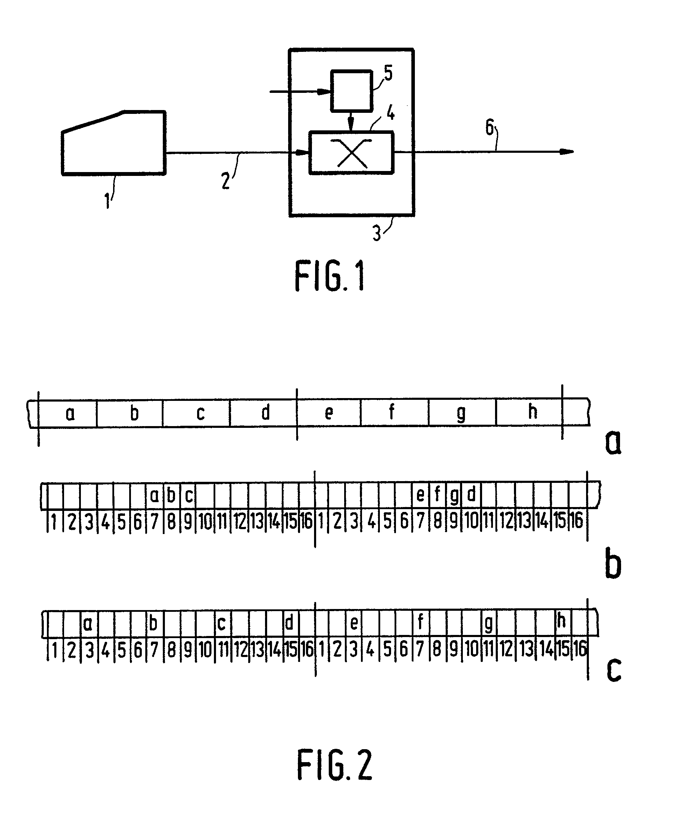

Mit Hilfe der Fig. 2a und 2b soll im folgenden das Auftreten einer Verwürfelung von Nutzinformationen gezeigt werden. In Fig. 2a sind zwei Rahmen mit jeweils vier Zeitkanälen aufgezeichnet, die auf der Eingangsstrecke übertragen werden. Zum ersten Rahmen gehören vier Nutz-Zeitkanäle mit vier Nutzinformationen a, b, c und d und zu dem zweiten Rahmen vier Nutz-Zeitkanäle mit den Nutzinformationen e, f, g und h. Die Nutzinformation der vier Nutz-Zeitkanäle sollen auf vier Zeitkanäle der Ausgangsstrecken verteilt werden. Die Ausgangsstrecke weist pro Rahmen sechzehn Zeitkanäle auf. Ein Vermittlungsrechner innerhalb der Vermittlungsanordnung wählt zur Übertragung vier Nutz-Zeitkanäle aus. Werden die Nutz-Zeitkanäle von dem Vermittlungsrechner so gewählt, daß innerhalb eines Rahmens die Nutzinformation a, b und c aber nicht die Nutzinformation d übertragen werden können (siebter, achter, neunter und zehnter Zeitkanal des Rahmens), weil der Nutz-Zeitkanal für die Nutzinformation d der Ausgangsstrecke zeitlich früher als der entsprechende Nutz-Zeitkanal der Eingangsstrecke auftritt, so entsteht eine Verwürfelung. Es werden nämlich im nächsten Rahmen erst die Nutzinformationen e, f und g in die Nutz-Zeitkanäle der Ausgangsstrecke eingefügt und dann die Nutzinformation d.

Der Erfindung liegt daher die Aufgabe zugrunde, eine Zeitmultiplexübertragungsanordnung zu schaffen, die eine Verwürfelung vermeidet.

Diese Aufgabe wird bei einer Zeitmultiplexübertragungsanordnung der eingangs genannten Art dadurch gelöst, daß die Vermittlungsanordnung zum Einfügen von Nutzinformationen der Nutz-Zeitkanäle der Eingangsstrecke in jeweils untereinander einen Abstand von ((N + 1)B2/B1-1) Zeitkanäle aufweisende Nutz-Zeitkanäle der Ausgangsstrecke vorgesehen ist, wobei N gleich der Anzahl der Zeitkanäle zwischen zwei Nutz-Zeitkanälen der Eingangsstrecke ist.

Bei einer solchen Zeitmultiplexübertragungsanordnung werden in der Vermittlungsanordnung solche Nutz-Zeitkanäle der Ausgangsstrecke zur Übertragung der Nutzinformationen ausgewählt, die einen bestimmten zeitlichen Abstand aufweisen. Dieser Abstand ist definiert als (N + 1)B2/B1-1. Hierbei ist B1 die erste Bitrate, B2 die zweite Bitrate und N die Anzahl der Zeitkanäle zwischen zwei Nutz-Zeitkanälen der Eingangsstrecke. Sind beispielsweise vier zeitlich aufeinanderfolgende Nutz-Zeitkanäle einer Eingangsstrecke mit einer ersten Bitrate B1 von 64 kbit/s auf Nutz-Zeitkanäle der Ausgangsstrecke, die eine zweite Bitrate B2 von 256 kbit/s aufweist, zu verteilen, so werden in jeden vierten Nutz-Zeitkanal der Ausgangsstrecke die Nutzinformationen eingefügt. Der Abstand zwischen zwei Nutz-Zeitkanälen der Ausgangsstrecke beträgt drei Zeitkanäle. Durch diese Maßnahme ist gewährleistet, daß keine Verwürfelung auftritt. Der Nutz-Zeitkanal der Ausgangsstrecke erscheint immer zeitlich gleichzeitig oder zeitlich später als der entsprechende Nutz-Zeitkanal der Eingangsstrecke.

Zur Verteilung der auf der Eingangsstrecke in Nutz-Zeitkanälen ankommenden Nutzinformationen auf die Nutz-Zeitkanäle der Ausgangsstrecke ist in der Vermittlungsanordnung wenigstens ein digitales Koppelfeld enthalten. Zur Steuerung des digitalen Koppelfeldes ist ein Vermittlungsrechner in der Vermittlungsanordnung vorgesehen.

Der Vermittlungsrechner dient vor der Übertragung der Nutzinformationen zum Empfangen der Mitteilung, in welchen Nutz-Zeitkanälen der Eingangsstrecke die Nutzinformationen vorhanden sind. Des weiteren ist der Vermittlungsrechner mit Bestimmungsmitteln zur Bestimmung der Nutz-Zeitkanäle der Ausgangsstrecke versehen. Eine solche Information über die Nutz-Zeitkanäle der Eingangsstrecke kann dem Vermittlungsrechner durch eine Eingabe vor Installation der Eingangsstrecke und des Teilnehmergerätes gegeben werden oder diese Information kann dem Vermittlungsrechner über eine weitere Leitung von dem Teilnehmergerät zugeführt werden. Nach der Zuführung ermittelt der Vermittlungsrechner die Nutz-Zeitkanäle der Ausgangsstrecke und deren zeitlichen Abstand.

In einer Weiterbildung der Erfindung ist vorgesehen, daß Mittel zum Zuführen der deltamodulierten Nutzinformationen von einem Teilnehmergerät in mehreren Nutz-Zeitkanälen über eine erste Eingangsstrecke zu einem Multiplexer vorgesehen sind, der zum Zuführen der Nutzinformationen eines Nutz-Zeitkanals über jeweils mehrere Leitungen zu einer zweiten Eingangsstrecke der Vermittlungsanordnung dient, und daß die Vermittlungsanordnung zum gleichmäßigen Einfügen der Nutzinformationen der Nutz-Zeitkanäle der zweiten Eingangsstrecke in Nutz-Zeitkanäle der Ausgangsstrecke eingerichtet ist. Bei dieser Weiterbildung ist die Eingangsstrecke in zwei Teilabschnitte mit einem dazwischengeschaltetem Multiplexer aufgeteilt. Der Multiplexer ist erforderlich, damit alle Nutzinformationen des Teilnehmergerätes, das eine höhere Bitrate als eine der Leitungen der zweiten Eingangsstrecke aufweist, zur Vermittlungsanordnung gelangen. Beispielsweise kann eine der Leitungen der zweiten Eingangsstrecke eine Bitrate von 16 kbit/s und die erste Eingangsstrecke eine Bitrate von 64 kbit/s aufweisen. Für die Ausgangsstrecke kann eine Bitrate von 256 kbit/s oder 512 kbit/s vorgesehen werden. Dann weist diese bei einer Bitrate von 256 kbit/s sechzehn Zeitkanäle auf und bei einer Bitrate von 512 kbit/s zweiunddreißig Zeitkanäle auf.

Die Nutzinformationen sind in den Nutz-Zeitkanälen der Ausgangsstrecken gleichmäßig verteilt, d.h. es weisen auch die zeitlich aufeinanderfolgenden Nutz-Zeitkanäle zweier zeitlich aufeinanderfolgender Rahmen den gleichen Abstand auf wie zwei zeitlich aufeinanderfolgende Nutz-Zeitkanäle in einem Rahmen. Der Vermittlungsrechner fügt also bei einer Bitrate von 256 kbit/s der Ausgangsstrecke in jeden vierten Zeitkanal (Nutz-Zeitkanal) und bei einer Bitrate von 512 kbit/s der Ausgangsstrecke in jeden achten Zeitkanal (Nutz-Zeitkanal) Nutzinformationen ein. Durch die gleichmäßige Verteilung der Nutz-Zeitkanäle ist beim Übergang verschiedener Deltamodulations-Systeme keine Umcodierung der Nutzinformation erforderlich.

Ein Deltamodulations-System ist z.B. ein System in DCDM-Codierung (Digitally Controlled Delta Modulation) mit Zeitkanälen von jeweils 16 kbit/s (DCDM-16-System). Ein solches DCDM-16-System kann z.B. über eine Vermittlungsanordnung mit einem DCDM-32-System verbunden werden. Es werden also auf einer Übertragungsstrecke Nutzinformationen in 16 kbit/s-Zeitkanälen übertragen. In der Vermittlungsanordnung werden diese Nutzinformationen auf eine Übertragungsstrecke gegeben, die Nutzinformationen in 32 kbit/s- Zeitkanälen in DCDM-Codierung weiterleitet. Hierbei werden dann die Nutzinformationen jeweils zweier Nutz-Zeitkanäle des DCDM-16-Systems in jeweils einen Nutz-Zeitkanal des DCDM-32-Systems eingefügt.

Ausführungsbeispiele der Erfindung werden nachstehend anhand der Zeichnungen näher erläutert.

Es zeigen:

Fig. 1 eine vereinfacht dargestellte Zeitmultplexübertragungsanordnung,

Fig. 2a zwei schematisch dargestellte Rahmen mit jeweils vier Zeitkanälen, die auf einer Eingangsstrecke einer Zeitmultiplexanordnung übertragen werden,

Fig. 2b zwei schematisch dargestellte Rahmen mit jeweils sechzehn Zeitkanälen, die auf einer Eingangsstrecke einer bekannten Zeitmultiplexanordnung übertragen werden,

Fig. 2c zwei schematisch dargestellte Rahmen mit jeweils sechzehn Zeitkanälen, die auf einer Eingangsstrecke einer erfindungsgemäßen Zeitmultiplexanordnung übertragen werden

Fig. 3 ein Flußlaufdiagramm zur Erläuterung eines in der Fig. 1 verwendeten Vermittlungsrechners und

Fig. 4 eine vereinfacht dargestellte Zeitmultiplexübertragungsanordnung für deltamodulierte Signale.

Die in Fig. 1 schematisch dargestellte Zeitmultiplexübertragungsanordnung enthält ein Teilnehmergerät 1, z.B. einen Rechner, der über eine Eingangsstrecke 2 mit einer Vermittlungsanordnung 3 verbunden ist. Über die Eingangsstrecke 2, die aus einer Leitung besteht, werden digitale Nutzinformationen im Zeitmultiplexverfahren mit einer Bitrate von 64 kbit/s übertragen. Die digitalen Nutzinformationen werden in jeweils vier Zeitkanälen über die Eingangsstrecke 2 gegeben. Vier solcher Zeitkanäle bilden einen Rahmen.

In Fig. 2a sind schematisch zwei Rahmen mit jeweils vier Zeitkanälen dargestellt. In jedem dieser Zeitkanäle wird eine Nutzinformation vom Teilnehmergerät 1 eingefügt.

Die Vermittlungsanordnung 3 enthält ein digitales Koppelfeld 4 und einen Vermittlungsrechner 5. Das digitale Koppelfeld 4, das von dem Vermittlungsrechner 5 gesteuert wird, fügt die Nutzinformationen der Nutz-Zeitkanäle der Eingangsstrecke 2 in Nutz-Zeitkanäle einer Ausgangsstrecke 6. Die Ausgangsstrecke 6 weist eine Bitrate von 256 kbit/s auf. Sechzehn Zeitkanäle der Ausgangsstrecke sind dabei zu einem Rahmen zusammengefügt. Fig. 2c zeigt zwei Rahmen der Ausgangsstrecke mit jeweils sechzehn Zeitkanälen.

Das digitale Koppelfeld fügt die Nutzinformationen der Nutz-Zeitkanäle der Eingangsstrecke 2 in bestimmte Nutz-Zeitkanäle der Ausgangsstrecke 6. Hierbei wird das digitale Koppelfeld 4 von dem Vermittlungsrechner 5 so gesteuert, daß die Nutz-Zeitkanäle der Ausgangsstrecke den gleichen zeitlichen Abstand aufweisen. Hierzu wertet der Vermittlungsrechner 5 eine Information aus, die beispielsweise von einer Bedienungsperson, die das Teilnehmergerät 1 an die Vermittlungsanordnung anschließt, vorgegeben wird. Als Information wird dem Vermittlungsrechner 5 mitgeteilt, in welchen Zeitkanälen der Eingangsstrecke Nutzinformationen vorhanden sind. In dem vorliegenden Beispiel wird angegeben, daß alle vier Zeitkanäle Nutz-Zeitkanäle sind. Der Vermittlungsrechner berechnet dann welcher Zeitkanal der Ausgangsstrecke ein Nutz-Zeitkanal ist. Hierbei wird im Vermittlungsrechner 5 der Abstand der einzelnen Nutz-Zeitkanäle nach der Formel $(N+1)B2/B1-1$ berechnet. N ist die Anzahl der Zeitkanäle zwischen zwei Nutz-Zeitkanälen der Eingangsstrecke 2, B1 die Bitrate der Eingangsstrecke 2 und B2 die Bitrate der Ausgangsstrecke 6. Der Abstand der Nutz-Zeitkanäle der Ausgangsstrecke 6 beträgt folglich 3 Zeitkanäle. Nach jeweils vier Zeitkanälen erscheint also ein Nutz-Zeitkanal. In der Fig. 2c sind als Beispiel der dritte, siebte, elfte und fünfzehnte Zeitkanal als Nutz-Zeitkanäle vorgesehen. Die Nutzinformation a der Eingangsstrecke 2 ist also in den dritten Zeitkanal, die Nutzinformation b der Eingangsstrecke 2 in den siebten Zeitkanal, die Nutzinformation c in den elften Zeitkanal und die Nutzinformation d der Eingangsstrecke 2 in den fünfzehnten Zeitkanal der Ausgangsstrecke 6 gegeben. Durch diese Maßnahme entsteht keine Verwürfelung der Nutzinformationen.

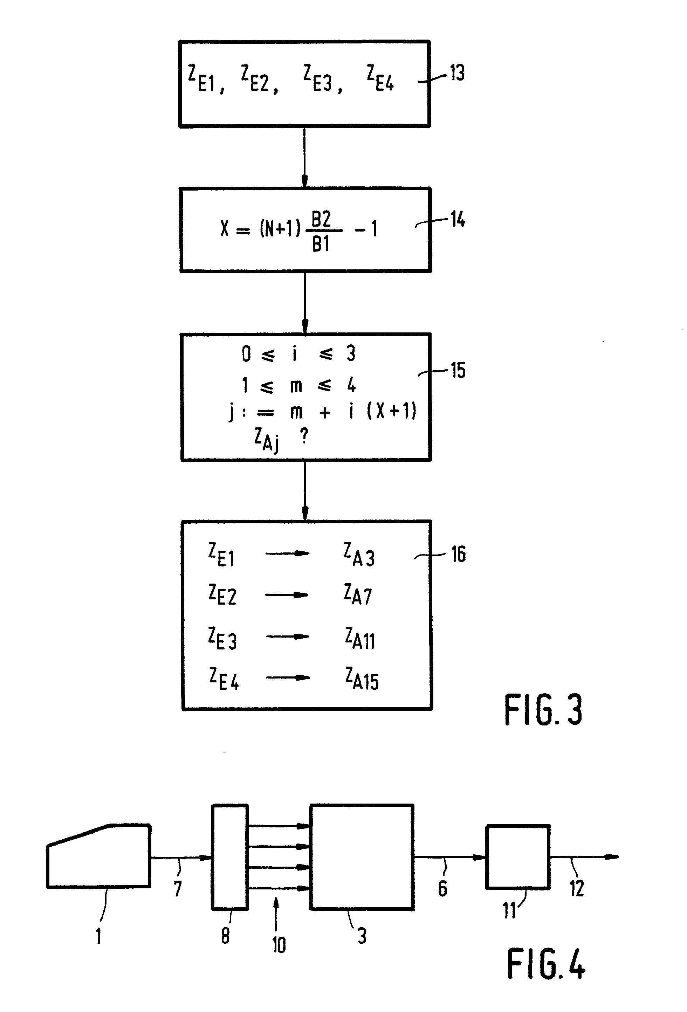

In der Fig. 3 ist ein Flußlaufdiagramm dargestellt, womit die Arbeitsweise des Vermittlungsrechners 5, der beispielsweise einen Mikroprozessor enthält, dargestellt ist. Zu Beginn einer Übertragung wird dem Vermittlungsrechner 5, wie das in Block 13 dargestellt ist, mitgeteilt, welche Zeitkanäle der Eingangsstrecke 2 Nutz-Zeitkanäle sind und welchen Abstand sie jeweils voneinander aufweisen. In dem vorliegenden Ausführungsbeispiel sind alle Zeitkanäle $Z_{E1}$, $Z_{E2}$, $Z_{E3}$ und $Z_{E4}$ Nutz-Zeitkanäle. N ist also gleich 0. Wie Block 14 zeigt, wird anschließend vom Vermittlungsrechner 5 der Abstand zweier Nutz-Zeitkanäle der Ausgangsstrecke 6 berechnet. Für das Ausführungsbeispiel ergibt sich ein Abstand von drei Zeitkanälen (X = 3). Im nächsten Block 15 wird überprüft, welche Zeitkanäle der Ausgangsstrecke 6 Nutz-Zeitkanäle sind. Hierbei wird zuerst überprüft, ob der erste Zeitkanal $Z_{A1}$ der Ausgangsstrecke 6 ein Nuts-Zeitkanal sein kann. Anschließend wird überprüft, ob der Zeitkanal, der zum ersten Zeitkanal $Z_{A1}$ einen Abstand von drei Zeitkanälen aufweist, ein Nutz-Zeitkanal sein kann. Falls die Überprüfung ergibt, daß alle vier Zeitkanäle $Z_{Aj}$, die untereinander einen Abstand von jeweils drei Zeitkanälen aufweisen, Nutz-Zeitkanäle sein können, werden diese als Nutz-Zeitkanäle festgelegt. Es sei angenommen, daß die Zeitkanäle $Z_{A1}$ und $Z_{A2}$ für Synchronisations- und Hilfs-Informationen reserviert sind. Damit kann der Zeitkanal $Z_{A3}$ als Nutz-Zeitkanal zur Verfügung stehen. Als nächstes wird dann überprüft, ob die Zeitkanäle $Z_{A7}$, $Z_{A11}$ und $Z_{A15}$ Nutz-Zeitkanäle sein können. Wenn das der Vermittlungsrechner 5 festgestellt hat, werden diese als Nutz-Zeitkanäle reserviert. Wie in Block 16 noch dargestellt ist, wird die Nutzinformation des Nutz-Zeitkanales $Z_{E1}$ der Eingangsstrecke 2 in den Nutz-Zeitkanal $Z_{A3}$ der Ausgangsstrecke 6, die Nutzinformation der Nutz-Zeitkanales $Z_{E2}$ der Eingangsstrecke 2 in den Nutz-Zeitkanal $Z_{A7}$ der Ausgangsstrecke 6, die Nutzinformation des Nutz-Zeitkanales $Z_{E3}$ der Eingangsstrecke 2 in den Nutz-Zeitkanal $Z_{A11}$ der Ausgangsstrecke 6 und die Nutz-Information des Nutz-Zeitkanales $Z_{E4}$ in den Nutz-Zeitkanal $Z_{A15}$ der Ausgangsstrecke 6 gegeben.

In der Fig. 4 ist eine weitere schematisch dargestellte Zeitmultiplexübertragungsanordnung dargestellt. Ein Teilnehmergerät 1 überträgt seine Nutzinformationen über eine erste Eingangsstrecke 7 mit einer Bitrate von 64 kbit/s in vier Zeitkanälen zu einem Multiplexer 8. Zwischen dem Multiplexer 8 und einer Vermittlungsanordnung 3 ist eine zweite Eingangsstrecke 10 mit jeweils vier Leitungen, über die Nutzinformationen von 16 kbit/s übertragen werden, angeordnet. Die Multiplexeranordnung 8 verbindet die erste Eingangsstrecke 7 mit einer der Leitungen der zweiten Eingangsstrecke 10 zyklisch. In der Vermittlungsanordnung 3 werden die über die zweite Eingangsstrecke 10 übertragenen Nutzinformationen in Nutz-Zeitkanäle der Ausgangsstrecke 6 eingefügt. Die Ausgangsstrecke 6 weist eine Bitrate von 256 kbit/s auf. Des weiteren ist noch eine weitere Vermittlungsanordnung 11 vorgesehen, die die Nutzinformationen der Ausgangsstrecke 6 in die periodisch auftretenden Nutz-Zeitkanäle einer weiteren Ausgangsstrecke 12 einfügt. Die weitere Ausgangsstrecke hat eine Bitrate von 512 kbit/s.

Die Zeitmultiplexübertragungsanordnung der Fig. 3 eignet sich insbesondere zur Übertragung von deltamodulierten Signalen, beispielsweise in DCDM-Codierung (Digitally Controlled Delta Modulation). Die Ausgangsstrecke 6 ist dann Teil eines DCDM-16-Systems, d.h. zur Übertragung von Nutzinformationen werden jeweils Zeitkanäle mit einer Bitrate von 16 kbit/s verwendet. Die weitere Ausgangsstrecke 12 kann z.B. Teil eines DCDM-32-Systems sein. Bei einem DCDM-32-System werden die Nutzinformationen in Zeitkanälen mit jeweils einer Bitrate von 32 kbit/s übertragen. Die Vermittlungsanordnung 11 fügt dann jeweils die Nutzinformationen zweier Nutz-Zeitkanäle der Ausgangsstrecke 6 in jeweils einen Nutz-Zeitkanal der weiteren Ausgangsstrecke 12 ein. Da für die Übertragung von Nutzinformationen des Teilnehmergerätes 1 vier Nutz-Zeitkanäle der Ausgangsstrecke 6 zur Verfügung gestellt werden, sind zur Übertragung der gleichen Nutzinformation auf der weiteren Ausgangsstrecke 12 nur zwei Nutz-Zeitkanäle erforderlich. Bei der Vermittlung dieser Nutzinformation ist in der Vermittlungsordnung 11 keine Umcodierung erforderlich, da die Nutz-Zeitkanäle gleichmäßig verteilt sind.

Die Multiplexeranordnung dient dazu, alle Nutzinformationen eines Teilnehmergerätes 1, das eine höhere Bitrate aufweist als jede zur Vermittlungsanordnung 3 führende Leitung der zweiten Eingangsstrecke 10, zu übertragen.

**Patentansprüche**

1. Zeitmultiplexübertragungsanordnung mit einer Vermittlungsanordnung (3), zum Empfangen von Nutzinformationen in mehreren, untereinander einen gleichen Abstand aufweisenden Nutz-Zeitkanälen von wenigstens einem Teilnehmergerät (1) über eine Eingangsstrecke (2, 7, 8, 10) mit einer ersten Bitrate B1 und zum Einfügen von Nutzinformationen eines Nutz-Zeitkanals der Eingangsstrecke in einen Nutz-Zeitkanal einer Ausgangsstrecke (6), die zum Erzeugen einer gegenüber der ersten Bitrate B1 um ein ganzzahliges Vielfaches erhöhten zweiten Bitrate B2 vorgesehen ist, dadurch gekennzeichnet, daß die Vermittlungsanordnung (3) zum Einfügen von Nutzinformationen der Nutz-Zeitkanäle der Eingangsstrecke (2, 7, 8, 10) in jeweils untereinander einen Abstand von ((N+1)·B2/B1-1) Zeitkanäle aufweisende Nutz-Zeitkanäle der Ausgangsstrecke (6) vorgesehen ist, wobei N gleich der Anzahl der Zeitkanäle zwischen zwei Nutz-Zeitkanälen der Eingangsstrecke ist.

2. Zeitmultiplexübertragungsanordnung nach Anspruch 1, dadurch gekennzeichnet, daß die Vermittlungsanordnung (3) wenigstens ein digitales Koppelfeld (4) zum Verteilen der auf der Eingangsstrecke (2, 7, 8, 10) in Nutz-Zeitkanälen ankommenden Nutzinformationen auf die Nutz-Zeitkanäle der Ausgangsstrecke (6) enthält und daß ein Vermittlungsrechner (5) zur Steuerung des digitalen Koppelfeldes vorgesehen ist.

3. Zeitmultiplexübertragungsanordnung nach Anspruch 2, dadurch gekennzeichnet, daß der Vermittlungsrechner (5) vor der Übertragung der Nutzinformationen zum Empfangen der Mitteilung, in welchen Nutz-Zeitkanälen der Eingangsstrecke die Nutzinformationen vorhanden sind, dient, und daß der Vermittlungsrechner mit Bestimmungsmitteln zur Bestimmung der Nutz-Zeitkanäle der Ausgangsstrecke (6) versehen ist.

4. Zeitmultiplexübertragungsanordnung nach einem der vorhergehenden Ansprüche, dadurch gekennzeichnet, daß Mittel zum Zuführen der deltamodulierten Nutzinformationen von einem Teilnehmergerät (1) in mehreren Nutz-Zeitkanälen über eine erste Eingangsstrecke (7) zu einem Multiplexer (8) vorgesehen sind, der zum Zuführen der Nutzinformationen eines Nutz-Zeitkanals über jeweils mehrere Leitungen zu einer zweiten Eingangsstrecke (10) der Vermittlungsanordnung (3) dient, und daß die Vermittlungsanordnung zum gleichmäßigen Einfügen der Nutzinformationen der Nutz-Zeitkanäle der zweiten Eingangsstrecke in Nutz-Zeitkanäle der Ausgangsstrecke (6) eingerichtet ist.

FIG.1

FIG.2

$$Z_{E1}, \quad Z_{E2}, \quad Z_{E3}, \quad Z_{E4}$$ — 13

$$X = (N+1)\frac{B2}{B1} - 1$$ — 14

$$0 \leq i \leq 3$$
$$1 \leq m \leq 4$$
$$j := m + i(X+1)$$
$$Z_{Aj} \quad ?$$
— 15

$$Z_{E1} \longrightarrow Z_{A3}$$
$$Z_{E2} \longrightarrow Z_{A7}$$
$$Z_{E3} \longrightarrow Z_{A11}$$
$$Z_{E4} \longrightarrow Z_{A15}$$
— 16

**FIG.3**

**FIG.4**